# EUROPEAN PATENT APPLICATION

(11) **EP 3 489 198 A1**
(43) Date of publication of application: **29.05.2019**
(21) Application number: 18207876.6
(22) Date of filing: 22.11.2018
(51) Int. Cl.: C01G 53/00, H01M 4/525

(54) **CATHODE ACTIVE MATERIAL OF LITHIUM SECONDARY BATTERY**

(30) Priority: 22.11.2017 KR 20170156847; 16.08.2018 KR 20180095750
(71) Applicant: ECOPRO BM CO., LTD., Cheongju-si, Chungcheongbuk-do 28117 (KR)
(72) Inventor: JANG, Sung Jin, 28116 Cheongju-si (KR); CHOI, Moon Ho, 28116 Cheongju-si (KR); SUH, Jun Won, 28116 Cheongju-si (KR); LEE, Jung Han, 28116 Cheongju-si (KR); NAM, Ji Hyun, 28116 Cheongju-si (KR); CHOI, Seung Woo, 28116 Cheongju-si (KR)
(74) Representative: J A Kemp

(57) **Abstract**

The present invention relates to a cathode active material for a lithium secondary battery, and more particularly, to a cathode active material for a lithium secondary battery, which includes a core portion and a shell portion surrounding the core portion, in which a total content of cobalt in the core portion and the shell portion is 5 to 12 mol%, and the content of cobalt in the core portion and the shell portion is adjusted to be within a predetermined range.

In the cathode active material precursor and the cathode active material for a secondary battery prepared using the same according to the present invention, optimal capacity of a lithium secondary battery may be increased by adjusting the cobalt content in the particles of the cathode active material, and life characteristics may be enhanced by improving stability.

## Description

### BACKGROUND OF THE INVENTION

### Field of the invention

The present invention relates to a cathode active material for a lithium secondary battery, and more particularly, to a cathode active material for a lithium secondary battery, which includes a core portion and a shell portion surrounding the core portion, in which the content of cobalt in the core portion and the shell portion is adjusted to be within a predetermined range and a total content of cobalt in the core portion and the shell portion is adjusted to 5 to 12 mol%.

### Description of the Related Art

With the development of portable mobile electronic devices such as smart phones, MP3 players, and tablet PCs, demand for secondary batteries capable of storing electrical energy has explosively increased. In particular, demand for lithium secondary batteries is on the increase with the advent of electric vehicles, medium and large-sized energy storage systems, and portable devices requiring high energy density.

LiCoO₂ having a layered structure is commonly used as a cathode active material for a lithium secondary battery. LiCoO₂ is most commonly used due to excellent lifetime characteristics and charge/discharge efficiency thereof but it has low structural stability and thus has limitations in application to high capacity batteries.

Various lithium composite metal oxides such as LiNiO₂, LiMnO₂, LiMn₂O₄, LiFePO₄, Li(NixCoyMnz)O₂, and the like, have been developed as a cathode active material to replace LiCoO₂. Among the lithium composite metal oxides, LiNiO₂ has the advantage of exhibiting battery characteristics of a high discharge capacity but it is difficult to synthesize by a simple solid state reaction and has low thermal stability and low cycle characteristics. Lithium manganese-based oxides such as LiMnO₂ or LiMn₂O₄ are advantageously excellent in thermal stability and low in price but have a problem of low capacity and low temperature characteristics. In particular, LiMn₂O₄ is commercialized in some low-priced products but life characteristics thereof are poor due to structural distortion (Jahn-Teller distortion) due to Mn³⁺. LiFePO₄ has been widely studied for hybrid electric vehicles (HEV) due to low cost and safety thereof but it is difficult to apply to other fields due to low conductivity.

Recently, as an alternative cathode active material of LiCoO₂, lithium manganese cobalt oxide, Li(NiₓCo_{y}Mn_{z})O₂ (here x, y, and z are atomic fractions of independent oxide component elements, respectively, wherein 0<x≤1, 0<y≤1, 0<z≤1, and 0<x+y+z≤1) has come to prominence. This material is advantageously low in price and may be used for high capacity and a high voltage but has low rate capability and poor life characteristics at a high temperature.

In order to solve such problems, a lithium nickel manganese cobalt oxide in which a metal composition including a core portion having a high nickel content and a shell portion having a low nickel content has a concentration gradient have been researched and developed. According to this method, an internal material having a predetermined composition is first synthesized, a material having a different composition is applied to the outside of the internal material to form a dual-layer, which is then mixed with lithium salt and heat-treated. As the internal material, a commercially available lithium transition metal oxide may be used.

However, this method has a disadvantage in that the metal composition of the cathode active material is changed discontinuously between the generated internal material and the external material composition, and thus, since the metal composition of the cathode active material is not changed continuously gradually, an internal structure thereof is unstable. Also, since powder synthesized by this method does not use ammonia, which is a chelating agent, it has low tap density and is inappropriate for use as a cathode active material for a lithium secondary battery.

### SUMMARY

An aspect of the present invention provides a cathode active material precursor in which a total content of cobalt in a core portion and a shell portion is adjusted to a predetermined concentration, thus increasing safety and efficiency of a cathode active material having a core shell structure, and a cathode active material prepared using the same.

According to an aspect of the present invention, there is provided a cathode active material for a lithium secondary battery, including: a core portion and a shell portion surrounding the core portion, wherein when a total content of cobalt in the core portion and the shell portion is 5 to 12 mol% and the content of cobalt in the entire particles of the cathode active material is W, the content of cobalt in the shell portion is 0.2W to 1.0W. In one embodiment, the content of cobalt in the shell portion is 1.2W to 1.0W.

The cathode active material having the related art core-shell structure has an unstable internal structure due to a discontinuous change in metal compositions, which leads to a reduction in efficiency of a lithium secondary battery. In order to solve the problem, in the present invention, it was confirmed that, in the cathode active material for a lithium secondary battery having a core-shell structure, excellent stability and efficiency are obtained when a total content of cobalt in the core portion and the shell portion is adjusted to a predetermined value, specifically, to 5 to 12 mol.

According to another aspect of the present invention, the present invention provides a cathode active material for a lithium secondary battery represented by Chemical Formula 1 below in which the total content of cobalt in the core portion and shell portion is adjusted to a predetermined value (5 to 12 mol%).

[Chemical Formula1] LiₐNiₓCo_{y}Mn_{z}M_{1-x-y-z}O₂

(Here, 0.9≤a≤1.3, 0.7≤x<1.0, 0.05≤y≤0.12, 0.0≤z≤0.3, and 0.0≤1-x-y-z≤0.3, wherein M is one or more metal elements selected from among B, Ba, Ce, Cr, F, Mg, Al, Cr, V, Ti, Fe, Zr, Zn, Si, Y, Nb, Ga, Sn, Mo, W, P, Sr, Ge, and Cu).

In the cathode active material for a lithium secondary battery according to the present invention, when the content of cobalt in the entire particles of the cathode active material is W, the content of cobalt in the shell portion may be 0.2 W to 1.0 W.

According to one aspect of the present invention, when a diameter of the entire particles of the cathode active material according to the present invention is D, D may be 1 to 25 µm and a thickness of the shell portion may be 0.01 D to 0.3 D. That is, in the present invention, the thickness of the shell portion may be changed by adjusting the Co content in the entire particles and the Co content in the shell.

According to another aspect of the present invention, a lithium secondary battery including a cathode active material is provided.

The lithium secondary battery includes a cathode (positive electrode) including a cathode active material having the configuration described above, an anode (negative electrode) including an anode active material, and a separator present therebetween. Also, the lithium secondary battery includes an electrolyte immersed to be present in the cathode, the anode, and the separator. As the anode active material, a material capable of reversibly occluding/discharging lithium ions may be preferably used. For example, a material including artificial graphite, natural graphite, graphitized carbon fiber, amorphous carbon, and the like, may be used, and metal lithium may also be used as an anode active material. The electrolyte may be a liquid electrolyte containing a lithium salt and a non-aqueous organic solvent or may be a polymer gel electrolyte.

As described above, in the cathode active material precursor and the cathode active material for a secondary battery prepared using the same according to the present invention, optimal capacity of a lithium secondary battery may be increased by adjusting the cobalt content in the particles of the cathode active material, and life characteristics may be enhanced by improving stability.

### BRIEF DESCRIPTION OF THE DRAWINGS

The above and other aspects, features and other advantages of the present invention will be more clearly understood from the following detailed description taken in conjunction with the accompanying drawings, in which:
FIGS. 1 and 2 show results of measuring a size and an internal metal concentration of a cathode active material prepared according to an embodiment of the present invention.
FIGS. 3 to 6 show results of measuring characteristics of batteries including cathode active materials of Inventive Examples of the present invention and Comparative example.

### DETAILED DESCRIPTION OF THE PREFERRED EMBODIMENT

Hereinafter, the present invention will be described in more detail with reference to examples. These embodiments are only for illustrating the present invention and the scope of the present invention is not construed as being limited by these embodiments.

### Inventive Example: Preparation of Precursor

In order to prepare a cathode active material, nickel sulfate, cobalt sulfate, and manganese sulfate were prepared to first prepare precursors 1 to 3 including a core portion and a shell portion by a co-precipitation reaction. Here, the precursors were prepared such that compositions of the entire core and shell portions were 5 mol%, 9 mol%, and 12 mol% (Inventive Examples 1 to 3), respectively.

LiOH was added as a lithium compound and subjected to a first heat-treatment in the presence of N₂ and O₂/(1∼100 LPM) at a heating rate of 1°C/min ∼ 20°C/min for 4 to 20 hours (with respect to a maintained range). After the first heat treatment, 0 to 10 mol% of a compound containing Al was added to the resultant mixture and subjected to a secondary heat-treatment to prepare a cathode active material for a lithium secondary battery.

Next, distilled water was prepared and maintained at a constant temperature of 5 to 40°C. Thereafter, the prepared cathode active material for a lithium secondary battery was put into the distilled water and rinsed for 0.1 to 10 hours, while the temperature was maintained.

The rinsed cathode active material was filter-pressed and then dried at 50 to 300°C for 3 to 24 hours under the atmosphere of oxygen.

### Comparative Example: Preparation of Precursor

A cathode active material was prepared in the same manner as that of Inventive Example except that the cobalt content in the entire core and shell portions was 3 mol%.

### Experimental Example: Measurement of Particle Size

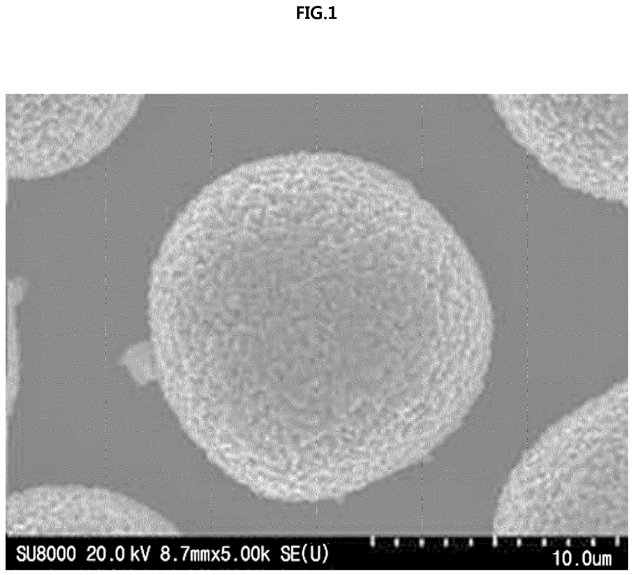

A particle size of Inventive Example 1 was measured and results thereof are shown in FIG. 1. As shown in FIG. 1, it can be seen that the particle size prepared according to Inventive Example of the present invention is 10 to 25 µm.

### Experimental Example: Measurement of Thickness of Shell Portion

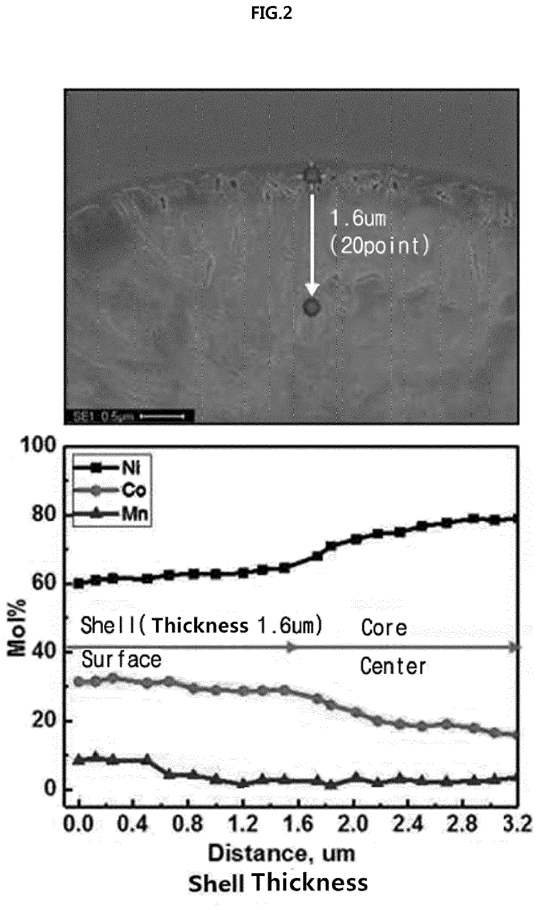

A thickness of the shell was measured on the basis of metal concentrations from a surface to the inside of the particle prepared in Inventive Example 1 and results thereof are shown in FIG. 2.

As shown in FIG. 2, it can be seen that a thickness of the shell of the particle prepared according to Inventive Example is 1.6 um.

### Manufacturing Example: Manufacturing of Half-Cell

94 wt% of the cathode active materials prepared according to Inventive Examples 1 to 3 and Comparative Example, 3 wt% of a conductive material (super-P), and 3 wt% of a binder (PVDF) were mixed in the ratio of 4.7g:0.15g:0.15g, respectively, mixed at 1,900 rpm/10 min. by a stirrer, applied to an Al foil by a micro-film applicator, and subsequently dried in a dry oven at 135°C for four hours to manufacture a positive plate.

A coin cell was manufactured using a lithium metal foil as a negative plate, polypropylene of W-Scope-20um as a separator, and 1.15 M LiPF having a composition of EC/EMC=7/3 as an electrolyte.

### Experimental Example: Measurement of Charging/Discharging Characteristics

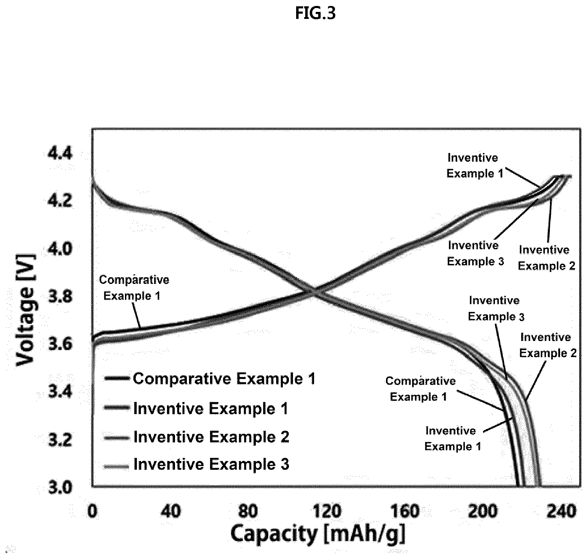

The charging/discharging characteristics of the particles of Inventive Examples 1 to 3 and the particles of Comparative Example were measured, and results thereof are shown in FIG. 3 and Table 1.

As shown in FIG. 3 and Table 1, it can be seen that, when a mole fraction of Co in the entire core and shell portions was 9%, the charging/discharging characteristics were significantly improved, as compared with Comparative Example.

**[Table 1]**

| | Charge Capacity (mAh/g) | Discharge Capacity (mAh/g) | Efficiency (%) | C-rate Retention (%) (5C/0.1C) | EIS (Ohm) | Cycle Retention (%) (50 Cyc) | Remark Co Composition |
|---|---|---|---|---|---|---|---|
| Comparative Example | 241.1 | 218.1 | 90.5% | 77.8 | 44.7 | 91.1 | 3 % |
| Inventive Example 1 | 238.3 | 220.8 | 92.7% | 80.4 | 28.4 | 95.1 | 5 % |
| Inventive Example 2 | 244.5 | 229.8 | 94.8% | 82.1 | 16.7 | 94.6 | 9 % |
| Inventive Example 3 | 242.0 | 227.6 | 94.0% | 82.0 | 18.4 | 95.0 | 12 % |

### Experimental Example 2: Measurement of Output Characteristics

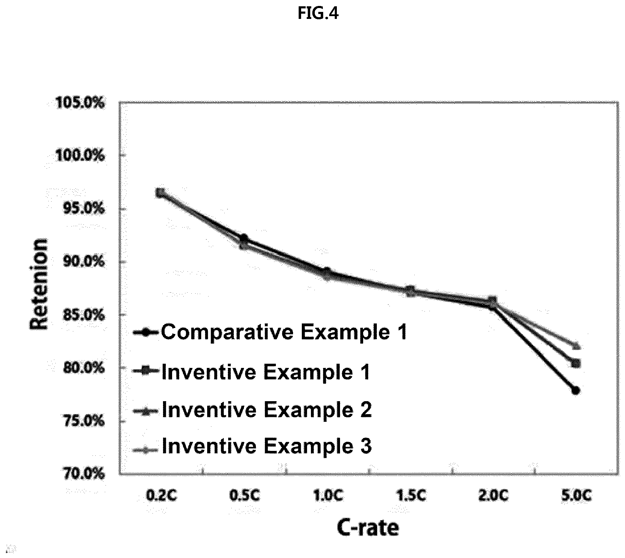

Output characteristics of the particles of Inventive Examples 1 to 3 and the particles of Comparative Example were measured and results thereof are shown in FIG. 4 and Table 1.

As shown in FIG. 4 and Table 1, it can be seen that, when a mole fraction of Co in the entire core and the shell portions was 9%, the output characteristics were significantly improved, as compared with Comparative Example.

Also, in FIG. 4 and Table 1, it can be seen that the secondary battery including the cathode active material according to the present invention has especially improved high-rate characteristics.

### Experimental Example 3: Measurement of Electrochemical Impedance Spectroscopy (EIS) Characteristics

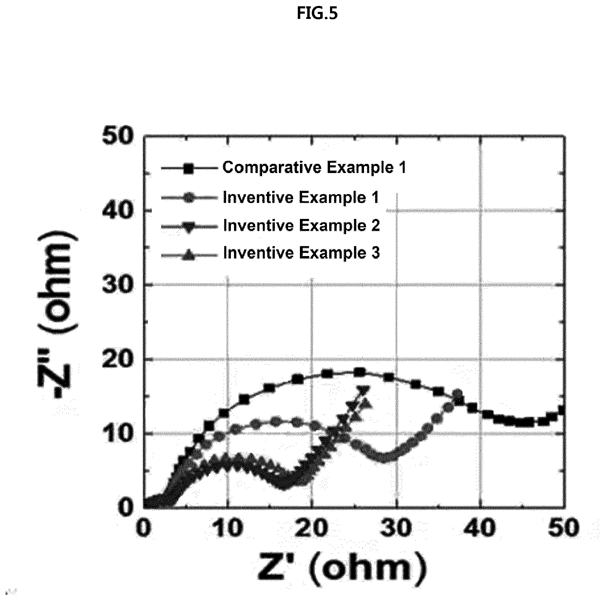

EIS resistance characteristics of the particles of Inventive Examples 1 to 3 and the particles of Comparative Example were measured, and results thereof are shown in FIG. 5 and Table 1.

As shown in FIG. 5 and Table 1, it can be seen that, when a mole fraction of Co in the entire core and shell portions was 9%, the EIS resistance characteristics were significantly improved, as compared with the Comparative Example.

### Experimental Example 4: Measurement of Life Characteristics

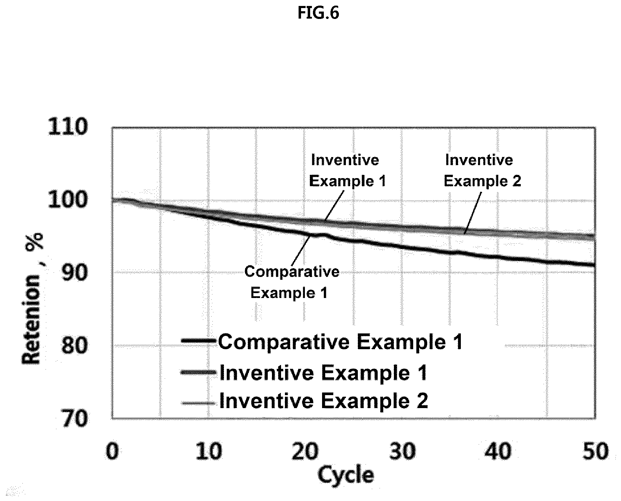

Life characteristics of the particles of Inventive Examples 1 to 3 and the particles of Comparative Example were measured, and results thereof are shown in FIG. 6 and Table 1.

As shown in FIG. 6 and Table 1, it can be seen that, when a mole fraction of Co in the entire core and shell portions was 12%, the life characteristics were significantly improved, as compared with Comparative Example.

## Claims

1. A cathode active material for a lithium secondary battery, the cathode active material comprising:
a core portion and a shell portion surrounding the core portion,
wherein when a total content of cobalt in the core portion and the shell portion is 5 to 12 mol% and the content of cobalt in the entire particles of the cathode active material is W, the content of cobalt in the shell portion is 0.2W to 1.0W.

2. The cathode active material of claim 1, wherein the cathode active material for a lithium secondary battery is represented by Chemical Formula 1 below:
[Chemical Formula1] LiₐNiₓCo_{y}Mn_{z}M_{1-x-y-z}O₂,
where 0.9≤a≤1.3, 0.7≤x<1.0, 0.05≤y≤0.12, 0.0≤z≤0.3, and 0.0≤1-x-y-z≤0.3, wherein M is one or more metal elements selected from among B, Ba, Ce, Cr, F, Mg, Al, Cr, V, Ti, Fe, Zr, Zn, Si, Y, Nb, Ga, Sn, Mo, W, P, Sr, Ge, and Cu.

3. The cathode active material of claim 1 or 2, wherein
when a diameter of the entire particles of the cathode active material is D, D is 1 to 25 µm and a thickness of the shell portion is 0.01 D to 0.3 D.

4. The cathode active material of any one of claims 1 to 3, wherein
density of cobalt in the core portion and density of cobalt in the shell portion are not equal.
